# FASCICULE DE BREVET EUROPEEN

(11) **EP 1 020 329 B1**
(45) Date de publication et mention de la délivrance du brevet: **01.10.2003**
(21) Numéro de dépôt: 00400043.6
(22) Date de dépôt: 10.01.2000
(51) Int. Cl.: B60R 11/02

(54) **Support orientable motorisé pour afficheur multifonctions dans un véhicule**
Richtungsteuerbarer Multifunktionsanzeigerträger in einem Kraftfahrzeug
Orientable motorised support for a multifunction display in a vehicle

(30) Priorité: 12.01.1999 FR 9900238
(43) Date de publication de la demande: 19.07.2000
(73) Titulaire: Peugeot Citroen Automobiles SA, 92200 Neuilly sur Seine (FR)
(72) Inventeur: Arnoux, Frédéric, 25200 Montbeliard (FR)
(74) Mandataire: Habasque, Etienne Joel Jean-François

(56) Documents cités:
- EP-A- 0 341 182
- WO-A-98/09842
- DE-A- 4 213 129
- PATENT ABSTRACTS OF JAPAN vol. 097, no. 008, 29 août 1997 (1997-08-29) & JP 09 109791 A (DAIFURETSUKUSU:KK), 28 avril 1997 (1997-04-28)
- PATENT ABSTRACTS OF JAPAN vol. 016, no. 576 (M-1345), 16 décembre 1992 (1992-12-16) & JP 04 224432 A (TOSHIBA CORP), 13 août 1992 (1992-08-13)
- PATENT ABSTRACTS OF JAPAN vol. 096, no. 008, 30 août 1996 (1996-08-30) & JP 08 110758 A (ALPINE ELECTRON INC), 30 avril 1996 (1996-04-30)

## Description

La présente invention concerne un système de fixation d'un afficheur multifonctions notamment d'aide à la navigation dans un véhicule automobile.

On sait qu'un nombre de plus en plus important de véhicules automobiles est équipé de systèmes d'aide à la navigation qui comprennent des afficheurs multifonctions adaptés pour délivrer aux utilisateurs de ces véhicules, des informations de guidage.

Ces afficheurs sont par exemple implantés dans ou sur la planche de bord du véhicule.

On conçoit cependant que la taille de ces afficheurs étant relativement réduite, la lecture des informations de guidage peut poser des problèmes et ce, d'autant plus que ces afficheurs sont orientés selon l'axe longitudinal du véhicule afin de pouvoir être observés, à la fois par le conducteur du véhicule et le passager avant de celui-ci.

Un système de fixation d'un afficheur multifonctions ayant les caratéristiques du préambule de la revendication 1 est décrit dans le document JP-A-04 224 432.

Le but de l'invention est donc de résoudre ces problèmes.

A cet effet, l'invention a pour objet un système de fixation d'un afficheur multifonctions selon la revendication 1.

L'invention sera mieux comprise à l'aide de la description qui va suivre, donnée uniquement à titre d'exemple et faite en se référant aux dessins annexés, sur lesquels :
- la Fig.1 illustre l'implantation d'un afficheur multifonctions dans une planche de bord de véhicule automobile;
- la Fig.2 représente une vue à échelle agrandie de cet afficheur; et
- la Fig.3 représente un schéma synoptique illustrant la structure générale de moyens de commande de l'orientation de cet afficheur, entrant dans la constitution d'un système selon l'invention.

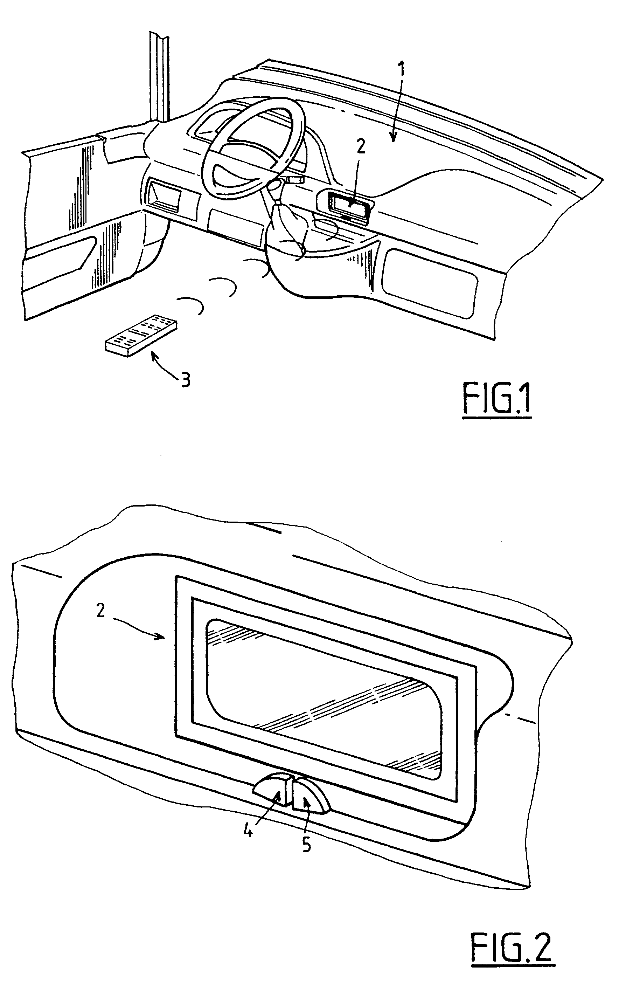

On a en effet représenté sur la figure 1, une partie d'habitacle de véhicule automobile et plus particulièrement d'une planche de bord désignée par la référence générale 1, de celui-ci.

Un afficheur multifonctions désigné par exemple par la référence générale 2 peut être implanté dans cette planche de bord, et plus particulièrement dans la portion centrale de celle-ci.

Cet afficheur multifonctions est par exemple associé à un système d'aide à la navigation du véhicule automobile et est alors adapté pour afficher des informations de guidage de ce véhicule.

Différents types d'afficheurs et d'applications peuvent être envisagés.

Ainsi par exemple et comme cela est illustré sur ces figures, cet afficheur multifonctions 2 peut être par exemple commandable à distance par l'intermédiaire d'un boîtier de télécommande tel que celui désigné par la référence générale 3 sur la figure 1, utilisant par exemple un rayonnement infrarouge pour permettre à un utilisateur de piloter le fonctionnement de cet afficheur et du système.

Les informations de commande sont alors transmises depuis le boîtier de télécommande 3 en direction de l'afficheur 2 par l'intermédiaire par exemple d'un émetteur d'informations.

L'afficheur multifonctions peut alors être associé, comme on peut le voir sur la figure 2, à deux récepteurs correspondants désignés par les références générales 4 et 5 sur cette figure, et dirigés l'un, par exemple 4, vers le siège de conducteur du véhicule et l'autre, par exemple 5, vers le siège du passager avant du véhicule.

On conçoit alors que selon la position de l'utilisateur du boîtier de télécommande, qu'il s'agisse du conducteur ou du passager disposé sur le siège avant de celui-ci, l'un ou l'autre de ces récepteurs 4 et 5 reçoit les informations issues de ce boîtier de télécommande.

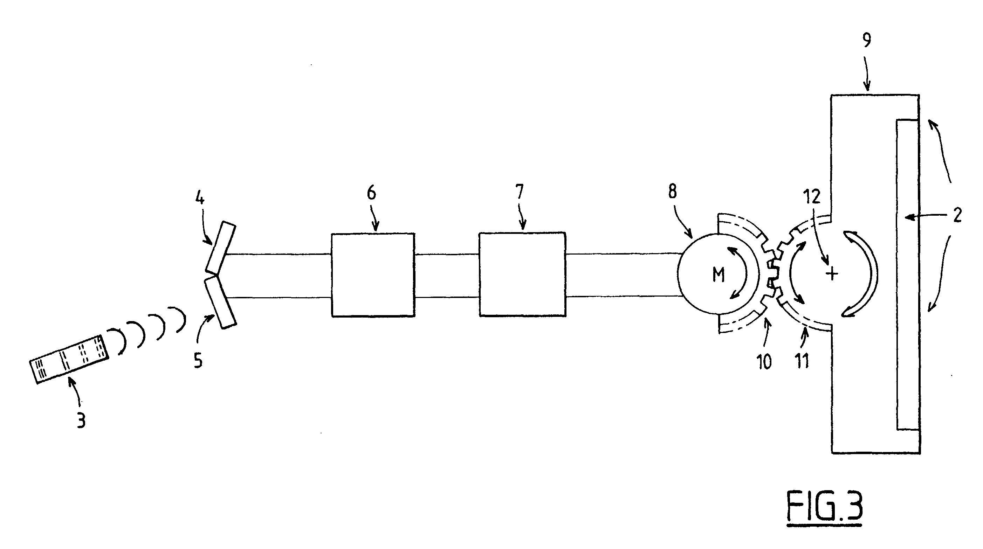

Ceci est mis à profit comme on peut le voir sur la figure 3, pour commander l'orientation de moyens de support de cet afficheur 2 par rapport au reste de la structure du véhicule.

En effet, les sorties d'informations des récepteurs 4 et 5 sont reliées à une unité de traitement d'informations désignée par la référence générale 6 sur cette figure, qui est elle-même raccordée en sortie à une interface de puissance désignée par la référence générale 7, pour contrôler le fonctionnement de moyens 8 de motorisation des déplacements de moyens de support 9 de l'afficheur multifonctions 2 par rapport au reste de la structure du véhicule.

Les moyens de motorisation 8 comprennent par exemple un moteur électrique dont l'arbre de sortie est associé à un organe en forme de portion de pignon 10 adapté pour coopérer avec un organe en forme de portion de pignon 11 associé aux moyens de support 9 de cet afficheur multifonctions 2.

Ces moyens de support sont alors montés pivotants par rapport au reste de la structure du véhicule, par exemple autour d'un axe matérialisé par la référence 12 sur cette figure.

On conçoit alors que selon le sens de rotation de l'arbre de sortie du moteur 8, c'est-à-dire en fait selon le sens de l'alimentation appliquée aux bornes de celui-ci, il est possible d'orienter l'afficheur multifonctions en direction du siège du conducteur du véhicule ou en direction du siège du passager avant de celui-ci.

A cet effet, l'unité de traitement d'informations 6 analyse la sortie de récepteurs 4 et 5 décrits précédemment, pour déterminer lequel de ces récepteurs reçoit les informations en provenance du boîtier de télécommande.

En fonction de cette détermination, cette unité de traitement d'informations 6 pilote l'interface de puissance 7 pour commander l'alimentation du moteur électrique 8 dans un sens ou dans l'autre afin de déplacer l'afficheur multifonctions dans l'une ou l'autre de ces orientations.

Ceci permet alors de placer l'afficheur multifonctions en regard de l'utilisateur de celui-ci afin qu'il ait une vision la plus directe possible des informations affichées sur celui-ci.

Il va de soi bien entendu que d'autres modes de réalisation encore de ce système peuvent être envisagés et que des moyens de motorisation autres qu'un moteur électrique associés à des organes en forme de portion de pignon peuvent être utilisés.

## Revendications

1. Système de fixation d'un afficheur multifonctions (2) notamment d'aide à la navigation, dans un véhicule automobile, l'afficheur (2) étant fixé sur le reste de la structure du véhicule par l'intermédiaire de moyens de support (9) orientables en direction du siège du conducteur et du siège du passager avant du véhicule, par l'intermédiaire de moyens de motorisation (8) dont le fonctionnement est piloté par des moyens de commande (3,4,5,6,7), **caractérisé en ce que** lesdits moyens de commande comprennent des moyens de commande à distance par l'utilisateur (3,4,5) du système de navigation, comportant un émetteur d'informations (3) à disposition de l'utilisateur et deux récepteurs correspondants (4,5) associés à l'afficheur (2) et dirigés l'un vers le siège de conducteur du véhicule et l'autre, vers le siège de passager avant de celui-ci et dont la sortie est reliée à l'unité de traitement d'informations (6) pour détecter le récepteur (4,5) recevant les informations en provenance des moyens de commande à distance pour orienter l'afficheur (2) dans la direction correspondante.

2. Système selon la revendication 1, **caractérisé en ce que** les moyens de support (9) sont montés pivotants (en 12) par rapport au reste de la structure du véhicule et sont associés à un organe (11) en forme de portion de pignon adapté pour coopérer avec un organe (10) en forme de portion de pignon associé aux moyens de motorisation (8).

3. Système selon l'une quelconque des revendications précédentes, **caractérisé en ce que** les moyens de motorisation (8) comprennent un moteur électrique.

## Claims

1. A system for fixing a multifunction display (2), such as a navigation aid display, into an automobile vehicle, the display (2) being fixed to the remainder of the structure of the vehicle by way of support means (9) that can be oriented toward the seat of the driver of the vehicle or the seat of the front seat passenger in the vehicle by drive means (8) whose operation is controlled by control means (3, 4, 5, 6, 7), which system is **characterised in that** said control means include means (3, 4, 5) for remote control of the navigation system by the user, including an information sender (3) accessible to the user and two corresponding receivers (4, 5) associated with the display (2), one of which is directed towards the seat of the driver of the vehicle and the other of which is directed towards the seat of the front seat passenger in the vehicle, and whose output is connected to the information processing unit (6) to detect the receiver (4, 5) receiving information from the remote control means in order to orient the display (2) in the corresponding direction.

2. A system according to claim 1, **characterised in that** the support means (9) are mounted to pivot relative to the remainder of the structure of the vehicle about an axis (12) and are associated with a member (11) in the shape of a portion of a gearwheel adapted to co-operate with a member . (10) in the shape of a portion of a gearwheel associated with the drive means (8).

3. A system according to either preceding claim, **characterised in that** the drive means (8) include an electric motor.

## Patentansprüche

1. System zur Halterung einer Multifunktionsanzeige (2) in einem Kraftfahrzeug, insbesondere zur Navigationshilfe, wobei die Anzeige (2) an dem übrigen Fahrzeugaufbau durch die Verbindung eines Trägermittels (9) befestigt ist und dabei in die Richtung des Fahrersitzes und des vorderen Fahrgastsitzes des Fahrzeugs durch ein motorisch angetriebenes Mittel (8) schwenkbar ausgebildet ist, dessen Funktion von Steuerungsmitteln (3, 4, 5, 6, 7) gesteuert wird, **dadurch gekennzeichnet, dass** diese Steuerungsmittel Fernsteuerungsmittel für den Benutzer (3, 4, 5) des Navigationssystems umfassen, welche einen Sender zur Informationsübertragung (3) zur Verfügung des Benutzers und zwei zugehörige Empfänger (4, 5) beinhalten, welche mit der Anzeige (2) verbunden sind, und wobei der eine zum Fahrersitz des Fahrzeugs und der andere zum vorderen Fahrgastsitz desselben hin weist, und deren Ausgänge an eine Einheit zur Informationsverarbeitung (6) angeschlossen sind, um den Empfänger (4, 5) zu ermitteln, der die Informationssignale von den Fernsteuerungsmitteln erhält, und um die Anzeige (2) in die dazu gehörige Richtung zu verschwenken.

2. System nach Anspruch 1, **dadurch gekennzeichnet, dass** die Trägermittel (9) schwenkbar (um 12) in Bezug auf den übrigen Aufbau des Fahrzeugs montiert und mit einem Körper (11) in Form eines Zahnradsegmentes verbunden sind, welcher so ausgebildet ist, dass er mit einem. Körper (10) in Form eines Zahnradsegmentes zusammenwirkt, welcher mit dem motorisch angetriebenen Mittel (8) verbunden ist.

3. System nach einem der vorhergehenden Ansprüche, **dadurch gekennzeichnet, dass** das motorisch angetriebenen Mittel (8) einen Elektromotor aufweist.
